# EUROPEAN PATENT APPLICATION

(11) **EP 4 738 068 A1**
(43) Date of publication of application: **06.05.2026**
(21) Application number: 25201730.6
(22) Date of filing: 11.09.2025
(51) Int. Cl.: G06F 1/3293

(54) **METHODS AND APPARATUS TO SAVE POWER BASED ON USER PRESENCE**

(30) Priority: 31.10.2024 US 202418933804
(71) Applicant: INTEL Corporation, Santa Clara, CA 95054 (US)
(72) Inventor: KOKI, Tarakesava Reddy, 500090 Hyderabad (IN); SUBRAHMANYAM, Prabhakar, San Jose, 95126 (US); WANG, Zhongsheng, Ridgefield, 98642 (US); KHAN, Feroze, 560017 Bengaluru (IN); ALAPARTHI, Phani, 560099 Bengaluru (IN); SHAHAPUR, Shreedhar, 583231 Koppal (IN); GUNNAM, Venkata Mahesh, 533234 East Godavari (IN); SAHA, Krishnendu, 560048 Bengaluru (IN)
(74) Representative: HGF

(57) **Abstract**

Systems, apparatus, articles of manufacture, and methods are disclosed to perform power-saving based on user presence, including a network interface to communicate with a cloud device, user presence detector circuitry to determine if a user is present or not present; workload distributor circuitry to distribute an AI workload to either first AI inference circuitry or second AI inference circuitry; and power circuitry to charge a battery at either a first charge level or a second charge level.

## Description

### BACKGROUND

As computing technology has improved, the development and use of artificial intelligence on computing devices has increased. Such artificial intelligence processes may analyze input data to infer a result about the input data (e.g., perform classification, cluster data, etc.). Computing devices may take many forms such as portable devices, servers, battery powered devices, etc.

### BRIEF DESCRIPTION OF THE DRAWINGS

FIG. 1 is a block diagram of an example environment in which an example computing device operates to implement power-saving based on user presence.
FIG. 2 is a block diagram of an example implementation of power saving circuitry of the computing device of FIG. 1.
FIG. 3 is a flowchart representative of example machine readable instructions and/or example operations that may be executed, instantiated, and/or performed by example programmable circuitry to implement the power saving circuitry of FIG. 2 to change a charging rate based on a determination of user presence.
FIG. 4 is a flowchart representative of example machine readable instructions and/or example operations that may be executed, instantiated, and/or performed by example programmable circuitry to implement the power saving circuitry of FIG. 2 to change a charging rate based on a determination of user presence.
FIG. 5 is a flowchart representative of example machine readable instructions and/or example operations that may be executed, instantiated, and/or performed by example programmable circuitry to implement the power saving circuitry of FIG. 2 to distribute an artificial intelligence (AI) workload based on a determination of user presence.
FIG. 6 is a flowchart representative of example machine readable instructions and/or example operations that may be executed, instantiated, and/or performed by example programmable circuitry to implement the power saving circuitry of FIG. 2 to distribute an AI workload based on a determination of user presence.
FIG. 7 is a flowchart representative of example machine readable instructions and/or example operations that may be executed, instantiated, and/or performed by example programmable circuitry to implement the power saving circuitry of FIG. 2 to, based on a determination of user presence, distribute an AI workload and select a charging level.
FIG. 8 is a graph that compares a first charging rate based on user presence and temperature of the computing device and a second charging rate based on temperature of the computing device.
FIG. 9 is a graph that compares, for a specified period of time, a percentage of a battery charged by the first charging rate of FIG. 8 and a percentage of the battery charged the second charging rate of FIG. 8.
FIG. 10 is a graph that compares an amount of time to charge a battery for the first charging rate of FIG. 8 and an amount of time to charge the battery for the second charging rate of FIG. 8.
FIG. 11 is an illustration which describes how the power saving circuitry of FIG. 2 distributes an AI workload based on a determination that a user is present at the computing device.
FIG. 12 is an illustration which describes how the power saving circuitry of FIG. 2 distributes an AI workload based on a determination that a user is not present at the computing device.
FIG. 13 is a graph that compares an amount of time to distribute the AI workload to an external device compared to an amount of time to distribute the AI workload to the local computing device.
FIG. 14 is a block diagram of an example processing platform including programmable circuitry structured to execute, instantiate, and/or perform the example machine readable instructions and/or perform the example operations of FIGS. 4-7 to implement the power saving circuitry of FIG. 2.
FIG. 15 is a block diagram of an example implementation of the programmable circuitry of FIG. 14.
FIG. 16 is a block diagram of another example implementation of the programmable circuitry of FIG. 14.

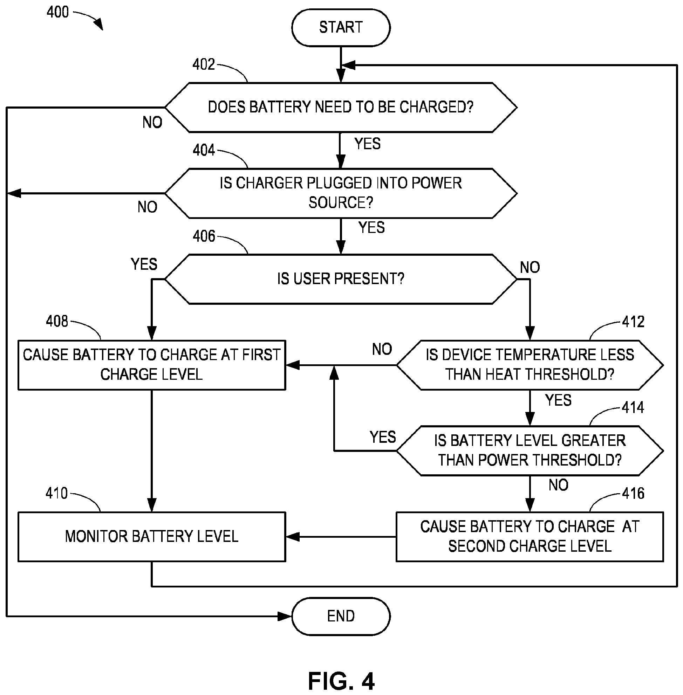

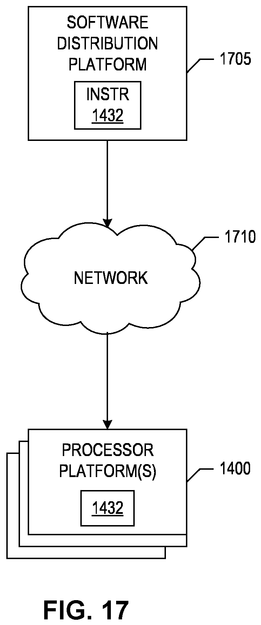

FIG. 17 is a block diagram of an example software/firmware/instructions distribution platform (e.g., one or more servers) to distribute software, instructions, and/or firmware (e.g., corresponding to the example machine readable instructions of FIGS. 4-7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Methods and apparatus disclosed herein utilize information about user presence at a computing device to control operation of the computing device (e.g., to conserve power based on user presence). Some techniques disclosed herein relate to increasing an amount of electrical power that is saved during charging of the computing device 104. Some techniques disclosed herein relate to increasing an amount of electrical power that is saved during artificial intelligence (AI) inference that is executed by the computing device 104. Some techniques disclosed herein modify a charging rate based on user presence and modify a distribution of an AI workload based on user presence.

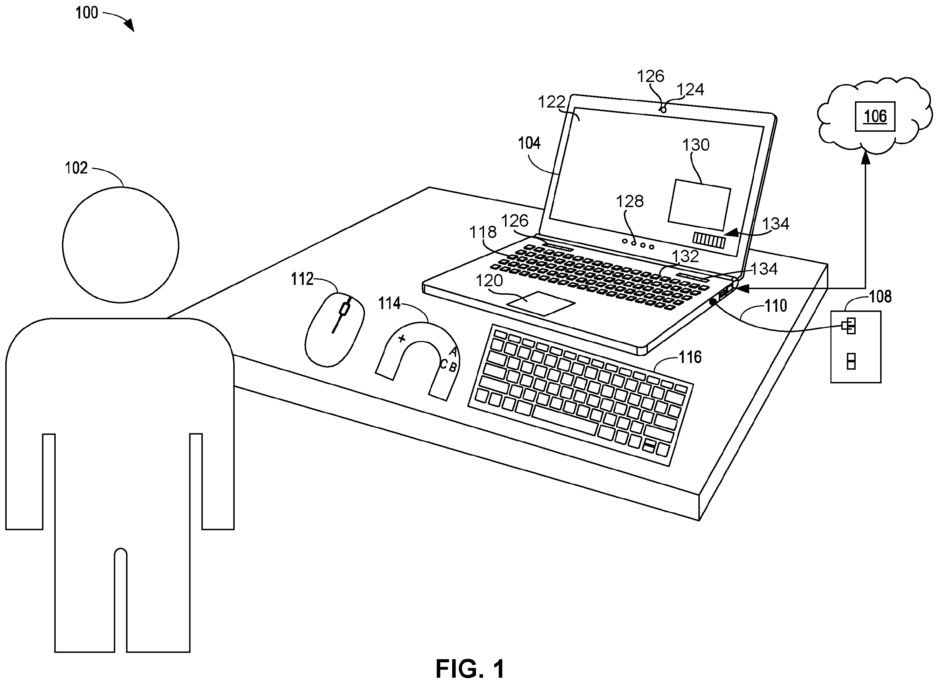

FIG. 1 is a block diagram of an example environment in which an example computing device 104 operates to implement power-saving based on user presence. In FIG. 1, an example user 102 is operating the example computing device 104. In some examples, the computing device 104 may activate a power-saving efficiency plan when the user leaves the presence of the computing device 104. For example, the power-saving efficiency plan may adjust the operation of an AI inference operation, battery charging, etc. While operating according to the power-saving efficiency plan, the computing device 104 may operate in a manner that would be inconvenient or unpleasant if a user 102 were present, but may be acceptable when it is determined that the user 102 is not present. By activating the power-saving efficiency mode after the user 102 has left the presence of the computing device 104, the techniques disclosed herein increase efficiency without providing inconvenience or discomfort to the user 102.

In the example of FIG. 1, the example computing device 104 is a laptop (e.g., portable personal computing device that includes a battery for powering the device when not connected to an external power source). However, in other examples, the computing device 104 may be any electronic device (e.g., a device which is capable of detecting user presence, is chargeable, and can connect with external devices to perform AI inference). Some example implementations of the computing device 104 include a desktop computer, an edge computing device, an Internet of Things computing device, a composite computing device, a mobile device, a cell phone, a smart phone, a hybrid or convertible PC, a personal computing (PC) device, a server, a modular computing device, a digital picture frame, a graphic calculator, a smart watch, and/or any other electronic device that is able to detect user presence.

In the example of FIG. 1, the computing device 104 is connected via a network connection to a remote computing device 106. In some examples, the remote computing device 106 is a remote device (e.g., external, cloud device, edge device, remote server, peer device, IoT, distributed computing solution, etc.).

The example computing device 104 transmits uncompleted portions of an AI workload for either completion or transmits completed portions of the AI workload for verification and/or correction. However, transmitting uncompleted portions of the AI workload may take a longer amount of time compared to performing, with the computing device 104, local AI inference on the uncompleted portions of the AI workload. Therefore, the techniques disclosed herein utilize a determination of user presence and/or user activity to determine whether to perform AI inference locally (which uses more power and may produce faster but incorrect results) or to offload the AI inference to the remote computing device 106 (which saves power for the computing device 104, and may produce slower, but more accurate results).

For example, if the computing device 104 determines that a user is not present or not actively using the computing device 104, then the computing device 104 transmits the uncompleted portions of the AI workload to the remote computing device 106 for completion. Alternatively, if the computing device 104 determines that a user is present or is actively using the computing device 104, then the computing device 104 locally performs AI inference on the uncompleted portions of the AI workload which generates completed portions of the AI workload, and uses the remote computing device 106 for verification and/or correction of the completed portions of the AI workload.

The example computing device 104 receives power from an example wall outlet 108 via an example charging cable 110. The charging cable 110 is capable of supplying current at a plurality of charging levels (e.g., a first charge level, a second charge level, a third charge level, etc.). In some examples, the charging cable 110 includes a converter which can set the charging level. In other examples, the charging cable 110 supplies current at the charging level specified (e.g., requested) by the computing device 104.

The example computing device 104 includes a plurality of external devices such as an example mouse 112, an example human interface device (HID) 114 (e.g., a gaming remote, a headset, a sketchpad, etc.), and an external keyboard 116. For example, after the user 102 inputs information by clicking a surface on the mouse 112, or moving a joystick of the HID 114, or typing on the external keyboard 116, the computing device 104 determines that the user 102 is still present, available, and/or actively using the computing device 104. In addition, the example computing device 104 includes an example integrated keyboard 118 and an example trackpad 120. Similarly, if the user 102 inputs information with the example keyboard 118 or the example trackpad 120, the computing device 104 determines that the user 102 is still present, available, and/or actively using the computing device 104.

The example computing device includes an example screen 122 (e.g., an example display) which includes an example camera 124, an example proximity sensor 126, and example speakers 128. These implements may also be used to determine that the example user 102 is present.

The example screen 122 is displaying an example visual representation of an AI workload 130 and an example battery charge level indication 132.

The example computing device includes example vents 136. For example, once the computing device 104 determines to enter a second charging level (e.g., a faster charging level compared to the first charging level), there is an increase in heat to various internal components of the computing device 104. This increased heat may be mechanically dispersed (e.g., via fans not shown in FIG. 1), which expel the heat through the example vents 134. For example, after the computing device 104 enters the second charging level, the computing device 104 activates the example fans from a first fan speed (e.g., which provides a first amount of cooling) to a second fan speed (e.g., which provides a second amount of cooling which is more than the first amount of cooling).

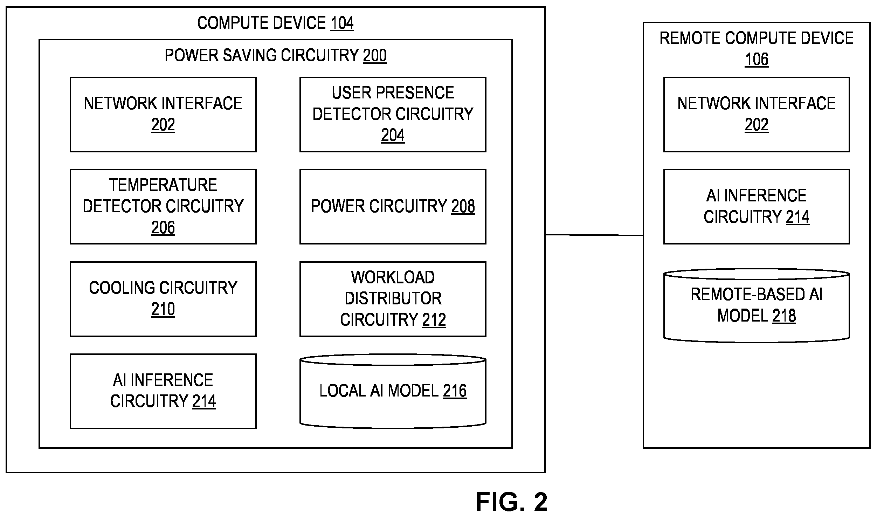

FIG. 2 is a block diagram of an example implementation of power-saving circuitry 200 of the computing device 104 of FIG. 1. The example computing device 104 is shown connected to an example remote computing device 106.

The example power-saving circuitry 200 includes an example network interface 202, an example user presence detector circuitry 204, an example temperature detector circuitry 206, example power circuitry 208, example cooling circuitry 210, example workload distributor circuitry 212, and example AI inference circuitry 214. The example AI inference circuitry 214 includes an example local AI model database 216 which stores a local AI model. The example AI inference circuitry 214 may execute the example local AI model to perform AI inference. In some examples, the power saving circuitry 200 includes the user presence detector circuitry 204, the temperature detector circuitry 206, the power circuitry 208, and the cooling circuitry 210. In other examples, the power saving circuitry 200 includes the network interface 202, the user presence detector circuitry 204, the workload distributor circuitry 212, the AI inference circuitry 214, and the local AI model database 216.

The example remote computing device 106 may include any of the components of the power-saving circuitry 200, but includes at least the example network interface 202 and the example AI inference circuitry 214. The example remote computing device 106 includes an example remote AI model database 218 which stores a remote AI model (e.g., cloud-based AI model). In some examples, the cloud-based AI model is a larger AI model that generates more accurate predictions than the local AI model that is stored on the computing device 104. For example, the cloud-based AI model may be several times larger than the local AI model. In other words, the cloud-based AI model may be ten gigabytes while the local AI model is one gigabyte. However, compared with local AI inference on the computing device 104, there is an increased amount of time for the computing device 104 to provide input data to the remote computing device 106, for the remote computing device 106 to perform inference with the cloud-based AI model to generate an output, and then transmit the output to the computing device 104.

For example, because generating and transmitting an output from the remote computing device 106 is slower than local inference on the computing device 104, the computing device 104 determines when to use the remote computing device 106 based on user presence or availability. For example, if a user is present, the computing device 104 performs local AI inference which produces a faster response. The computing device 104 may use the cloud-computing device 106 to verify or correct the faster response (e.g., local output) generated by performing AI inference with the local AI model. Alternatively, if a user is not present, the computing device 104 transmits queries to the cloud-computing device 106 which saves power for the computing device 104. After the cloud-computing device 106 generates the responses, the cloud-computing device 106 transmits the responses to the computing device 104. After the computing device 104 receives the responses (e.g., outputs, answers, etc.), the computing device 104 presents the responses on the screen 122 (FIG. 1) of the computing device 104.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. The examples disclosed herein are not limited to a particular machine learning model.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Once training is complete, the model is deployed for use as an executable construct that processes an input and provides an output based on the network of nodes and connections defined in the model. The model is stored at an example local AI model database 216 of a computing device 104 or an example remote AI model database 218 of a remote computing device 106. The model may then be executed by the AI inference circuitry 214 of the computing device 104 (e.g., the local machine, the edge device, etc.) or may be executed by the AI inference circuitry 214 of the remote computing device 106 (e.g., a cloud-based server, etc.)

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Returning to the example of FIG. 2, the example cloud device 106 includes a similar network interface 202 to the network interface 202 of the power-saving circuitry 200. The example cloud device 106 includes similar AI inference circuitry 214. However, unlike the computing device 104, the example cloud device 106 includes an example AI inference global model database 218. The example global AI model stored in the AI inference global model database 218 is larger and more accurate than an example AI local model stored in the AI inference local model database 216 of the computing device 104.

The example network interface 202 is to communicate AI workload prompts (e.g., inputs, data) to the example remote computing device 106. The example network interface 202 is to transmit tokens (e.g., send and/or receive tokens) between the computing device 104 and the cloud-computing device 106. The example remote computing device 106 performs validation of the initial predictions of the computing device 104. For example, the remote computing device 106 may perform AI inference on the initial tokens of the AI workload. In other examples, the remote computing device 106 performs validation of the predictions made by the computing device 104.

The example user presence detector circuitry 204 is to determine if a user is present. For example, the user presence detector circuitry 204 uses a proximity sensor 126, or the camera 124, or the HID devices 112, 114, 116 to determines that the user is present.

The example temperature detector circuitry 206 is to detect the temperature of the battery of the computing device 104. For example, different charging rates are used based on the temperature of the battery. For example, if the user 102 is absent, then the battery may be charged at a higher rate than would be comfortable if the user 102 was present. Alternatively, if the user 102 is present, then a lower heat threshold may be used which influences the battery charging rate.

The example power circuitry 208 is to set the charge level. For example, the power circuitry 208 sets the charge level at 0.2 Coulombs or 1.0 Coulombs depending on the if the user 102 is present. In other examples, the power circuitry 208 sets the charge level based on the temperature of the battery and the battery capacity indication (e.g., the battery is fifty percent charged, etc.).

The example cooling circuitry 210 is to activate the fans which cool the computing device 104 to a temperature that is comfortable for a user 102. For example, the cooling circuitry 210 reduces the temperature of the computing device 104 from 48 degrees Celsius to 46 degrees Celsius if the user 102 is absent or 44 degrees Celsius if the user returns from a period of absence.

The example workload distributor circuitry 212 allocates and manages AI tasks across both cloud services and local edge devices. By using a hybrid AI system that operates across cloud services and local edge devices allows for simultaneous model execution. In simultaneous model execution, the edge devices handle streamlined versions of the AI model (e.g., local AI model, smaller AI model, etc.) while the cloud services simultaneously processes more extensive segments of a cloud-based AI model (e.g., complete AI model, larger AI model, etc.). In some examples, the cloud-based AI model adjusts the outputs generated by edge devices.

The example workload distributor circuitry 212 of the computing device 104 activates after the example user 102 initiates an AI workload (e.g., AI task, etc.) to produce a series of tokens specific to the AI workload. As used herein, a token is a result from the AI workload. The example tokens may be correct or incorrect, and are subject to verification by other AI models. The example workload distributor circuitry 212 segments the tokens into smaller batches to facilitate processing on the computing device 104 (e.g., edge device). The example workload distributor circuitry 212 uses the AI inference circuitry 214 to perform the AI inference.

The example AI inference circuitry 214 is to perform AI inference based on the AI workloads. The example AI inference circuitry 214 is local to the computing device 104 and uses local AI models (e.g., smaller AI models, faster AI models, device AI models, etc.) from the local AI model database 216. In addition, the example remote computing device 106 includes AI inference circuitry 214 which is external to the computing device 104. The AI inference circuitry 214 of the remote computing device 106 uses external AI models (e.g., cloud-based AI models, larger AI models, more accurate AI models, remote AI models, etc.) from the remote AI model database 218.

FIG. 2 is a block diagram of an example implementation of the power saving circuitry 200 of FIG. 1 to save power of the computing device 104 based on if the user 102 is present or absent. The power saving circuitry 200of FIG. 2 may be instantiated (e.g., creating an instance of, bring into being for any length of time, materialize, implement, etc.) by programmable circuitry such as a Central Processor Unit (CPU) executing first instructions. Additionally or alternatively, the power saving circuitry 200of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

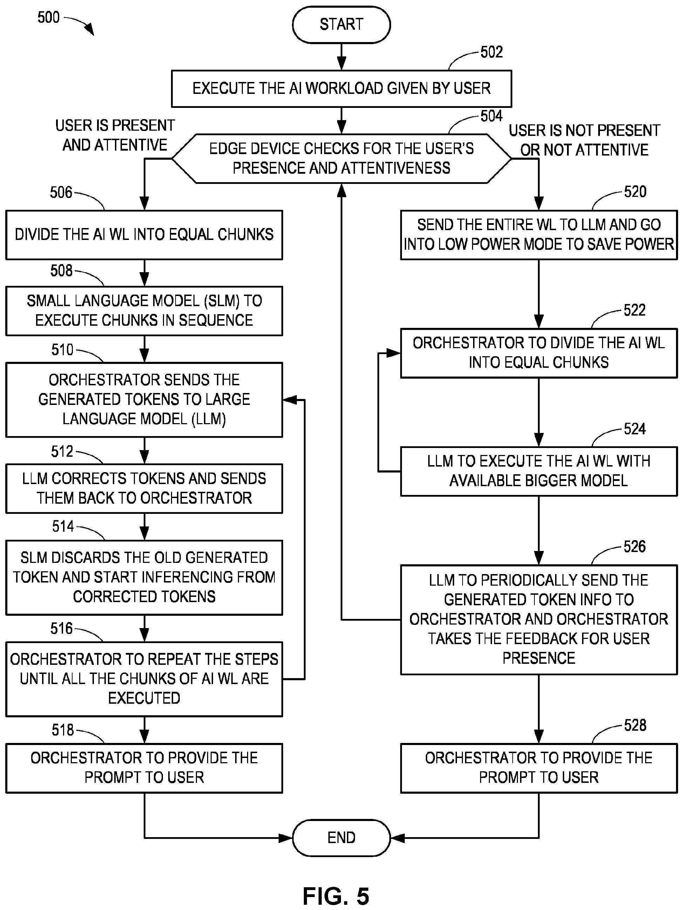

In some examples, the network interface 202 is instantiated by programmable circuitry executing network interface instructions and/or configured to perform operations such as those represented by the flowcharts of FIGS. 5, 6, and 7.

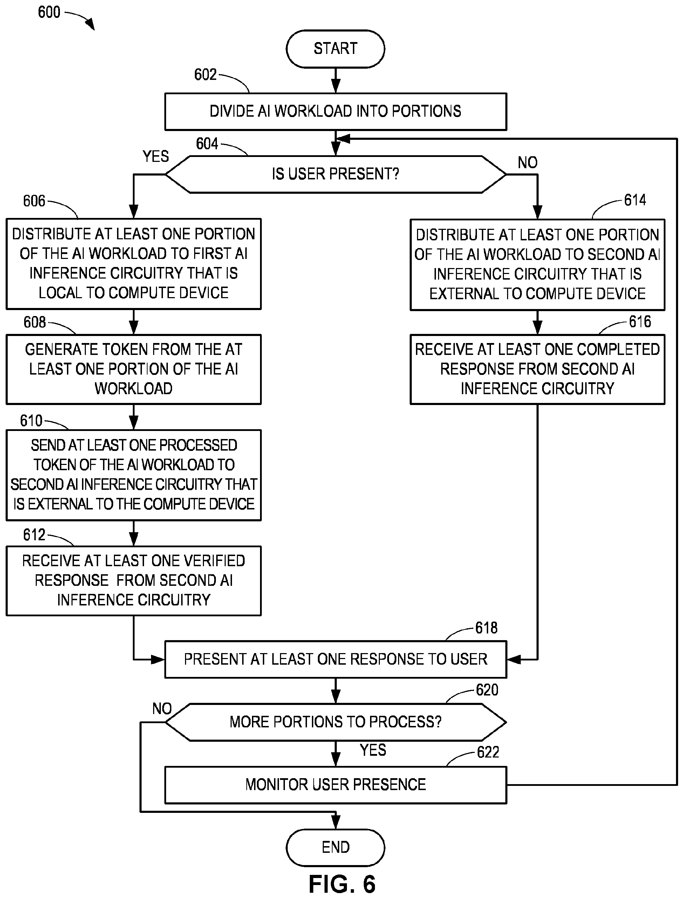

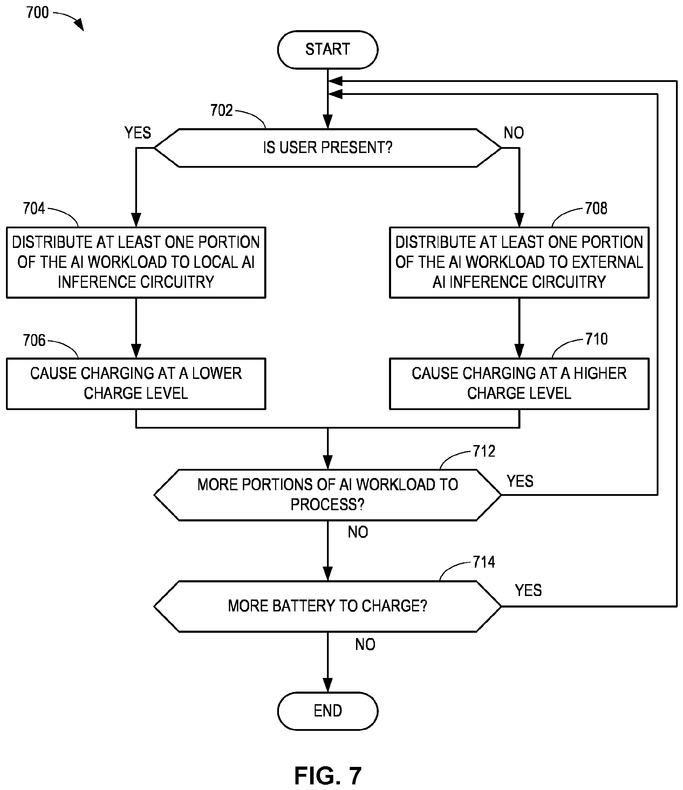

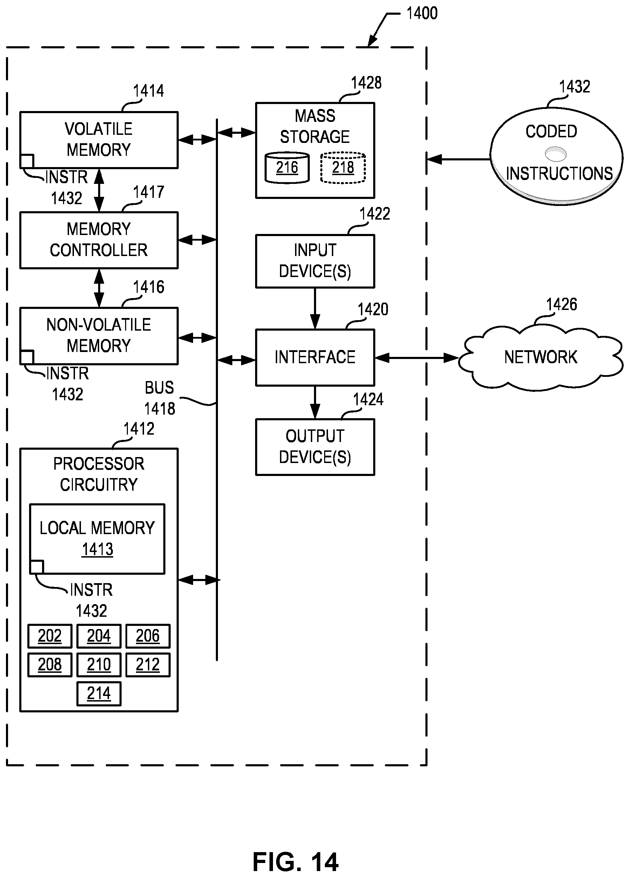

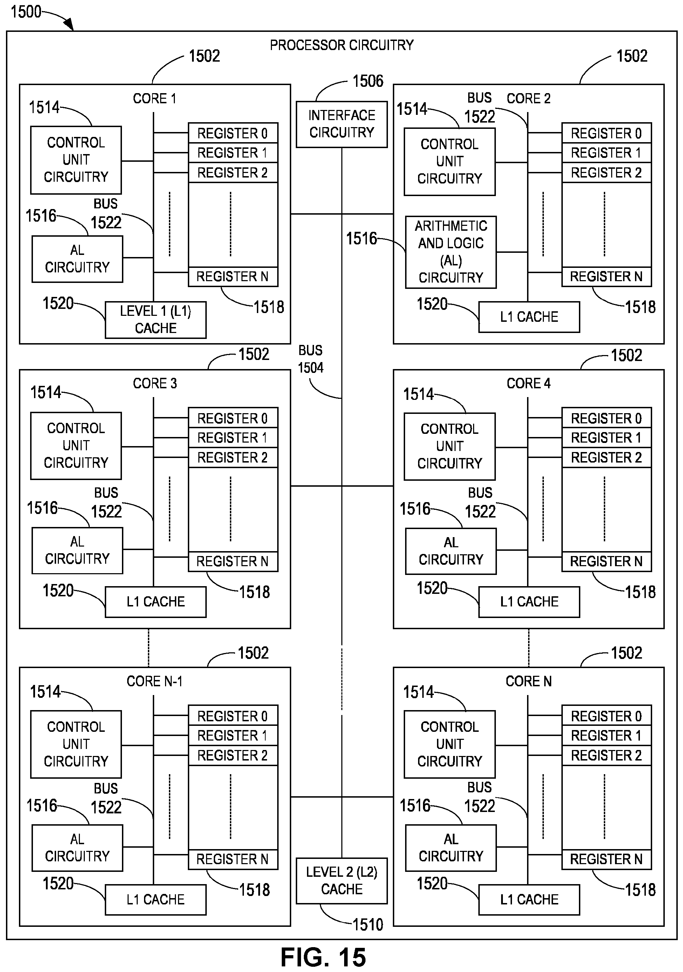

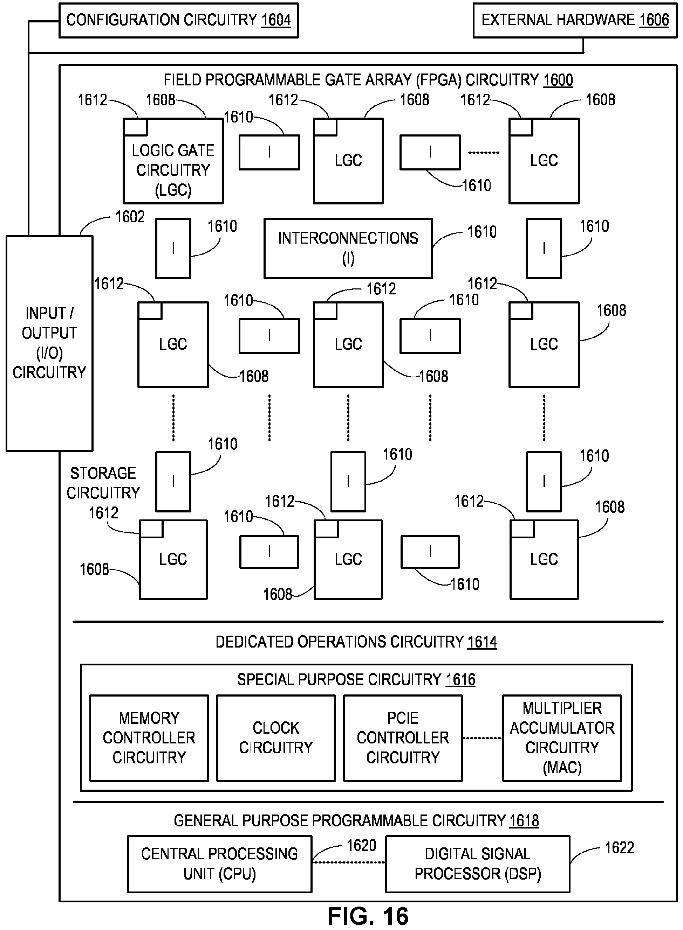

In some examples, the power saving circuitry 200 includes means for transmitting portions of an AI workload to a remote computing device 106. For example, the means for determining may be implemented by network interface 202. In some examples, the network interface 202 may be instantiated by programmable circuitry such as the example programmable circuitry 1412 of FIG. 14. For instance, the network interface 202 may be instantiated by the example microprocessor 1500 of FIG. 15 executing machine executable instructions such as those implemented by at least blocks 510, 522, 526 of FIG. 5, blocks 610, 612, 614, 616 of FIG. 6, and block 708 of FIG. 7. In some examples, the network interface 202 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the network interface 202 may be instantiated by any other combination of hardware, software, and/or firmware. For example, the network interface 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

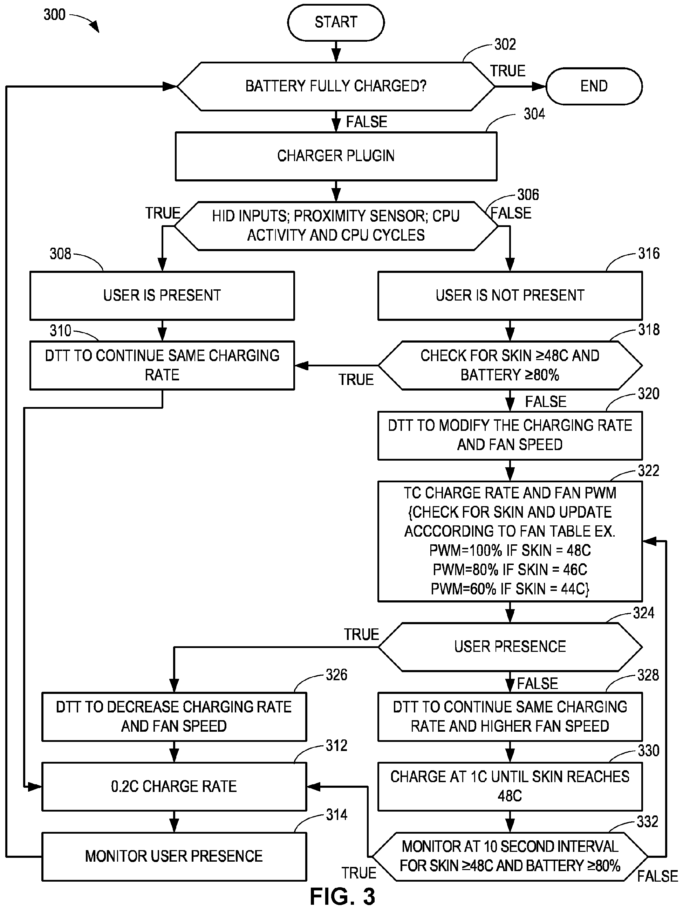

In some examples, the user presence detector circuitry 204 is instantiated by programmable circuitry executing user presence detector instructions and/or configured to perform operations such as those represented by the flowcharts of FIGS. 3, 4, 5, 6, and 7.

In some examples, the power saving circuitry 200 includes means for determining a user is present or absent from the example computing device 104. For example, the means for determining may be implemented by user presence detector circuitry 204. In some examples, the user presence detector circuitry 204 may be instantiated by programmable circuitry such as the example programmable circuitry 1412 of FIG. 14. For instance, the user presence detector circuitry 204 may be instantiated by the example microprocessor 1500 of FIG. 15 executing machine executable instructions such as those implemented by at least blocks 306, 308, 314, 316, 324 of FIG. 3, block 406 of FIG. 4, blocks 504 and 526 of FIG. 5, blocks 604 and 622 of FIG. 6, and block 702 of FIG. 7. In some examples, the user presence detector circuitry 204 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the user presence detector circuitry 204 may be instantiated by any other combination of hardware, software, and/or firmware. For example, the user presence detector circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the temperature detector circuitry 206 is instantiated by programmable circuitry executing temperature detector instructions and/or configured to perform operations such as those represented by the flowcharts of FIGS. 3 and 4.

In some examples, the power saving circuitry 200 includes means for determining a temperature of the example computing device 104. For example, the means for determining may be implemented by temperature detector circuitry 206. In some examples, the temperature detector circuitry 206 may be instantiated by programmable circuitry such as the example programmable circuitry 1412 of FIG. 14. For instance, the temperature detector circuitry 206 may be instantiated by the example microprocessor 1500 of FIG. 15 executing machine executable instructions such as those implemented by at least blocks 318, 322, 330, and 332 of FIG. 3 and block 412 of FIG. 4. In some examples, the temperature detector circuitry 206 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the temperature detector circuitry 206 may be instantiated by any other combination of hardware, software, and/or firmware. For example, the temperature detector circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the power circuitry 208 is instantiated by programmable circuitry executing power instructions and/or configured to perform operations such as those represented by the flowcharts of FIGS. 3, 4, 5, and 7.

In some examples, the power saving circuitry 200 includes means for selecting a charging level for the example computing device 104. For example, the means for selecting may be implemented by power circuitry 208. In some examples, the power circuitry 208 may be instantiated by programmable circuitry such as the example programmable circuitry 1412 of FIG. 14. For instance, the power circuitry 208 may be instantiated by the example microprocessor 1500 of FIG. 15 executing machine executable instructions such as those implemented by at least blocks 302, 304, 310, 312, 318, 320, 326, 328, 330, 332 of FIG. 3, blocks 4020, 404, 408, 410, 414, 416, and block 520 of FIG. 5, and blocks 706, 710, 714 of FIG. 7. In some examples, the power circuitry 208 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the power circuitry 208 may be instantiated by any other combination of hardware, software, and/or firmware. For example, the power circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the cooling circuitry 210 is instantiated by programmable circuitry executing cooling instructions and/or configured to perform operations such as those represented by the flowchart of FIG. 3.

In some examples, the power saving circuitry 200 includes means for selecting a fan speed level for cooling the example computing device 104. For example, the means for selecting may be implemented by cooling circuitry 210. In some examples, the cooling circuitry 210 may be instantiated by programmable circuitry such as the example programmable circuitry 1412 of FIG. 14. For instance, the cooling circuitry 210 may be instantiated by the example microprocessor 1500 of FIG. 15 executing machine executable instructions such as those implemented by at least blocks 320,322, 326, 328 of FIG. 3. In some examples, the cooling circuitry 210 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the cooling circuitry 210 may be instantiated by any other combination of hardware, software, and/or firmware. For example, the cooling circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the workload distributor circuitry 212 is instantiated by programmable circuitry executing workload distributor instructions and/or configured to perform operations such as those represented by the flowcharts of FIGS. 5-7.

In some examples, the power saving circuitry 200 includes means for distributing an AI workload between the example computing device 104 and the example remote computing device 106. For example, the means for selecting may be implemented by workload distributor circuitry 212. In some examples, the workload distributor circuitry 212 may be instantiated by programmable circuitry such as the example programmable circuitry 1412 of FIG. 14. For instance, the workload distributor circuitry 212 may be instantiated by the example microprocessor 1500 of FIG. 15 executing machine executable instructions such as those implemented by at least blocks 502, 506, 510, 516, 518, 520, 522, 528 of FIG. 5, blocks 602, 606, 610, 612, 614, 616, 618, 620 of FIG. 6, and blocks 704, 708, 712 of FIG. 7. In some examples, the workload distributor circuitry 212 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the workload distributor circuitry 212 may be instantiated by any other combination of hardware, software, and/or firmware. For example, the workload distributor circuitry 212 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the AI inference circuitry 214 is instantiated by programmable circuitry executing AI inference instructions and/or configured to perform operations such as those represented by the flowcharts of FIGS. 5-6.

In some examples, the power saving circuitry 200 includes means for performing AI inference on input data. For example, the means for selecting may be implemented by AI inference circuitry 214. In some examples, the AI inference circuitry 214 may be instantiated by programmable circuitry such as the example programmable circuitry 1412 of FIG. 14. For instance, the AI inference circuitry 214 of the computing device 104 may be instantiated by the example microprocessor 1500 of FIG. 15 executing machine executable instructions such as those implemented by at least blocks 508 and 514 of FIG. 5, and block 608 of FIG. 6. For instance, the AI inference circuitry 214 of the remote computing device 106 may be instantiated by the example microprocessor 1500 of FIG. 15 executing machine executable instructions such as those implemented by at least blocks 512, 524, and 526 of FIG. 5. In some examples, the AI inference circuitry 214 may be instantiated by hardware logic circuitry, which may be implemented by an ASIC, XPU, or the FPGA circuitry 1600 of FIG. 16 configured and/or structured to perform operations corresponding to the machine readable instructions. Additionally or alternatively, the AI inference circuitry 214 may be instantiated by any other combination of hardware, software, and/or firmware. For example, the AI inference circuitry 214 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the power saving circuitry 200of FIG. 1 is illustrated in FIG. 2, one or more of the elements, processes, and/or devices illustrated in FIG. 2 may be combined, divided, re-arranged, omitted, eliminated, and/or implemented in any other way. Further, the example network interface 202, the example user presence detector circuitry 204, the example temperature detector circuitry 206, the example power circuitry 208, the example cooling circuitry 210, the example workload distributor circuitry 212, the example AI inference circuitry 214, and/or, more generally, the example power saving circuitry 200of FIG. 2, may be implemented by hardware alone or by hardware in combination with software and/or firmware. Thus, for example, any of the example network interface 202, the example user presence detector circuitry 204, the example temperature detector circuitry 206, the example power circuitry 208, the example cooling circuitry 210, the example workload distributor circuitry 212, the example AI inference circuitry 214, and/or, more generally, the example power saving circuitry 200, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example power saving circuitry 200of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the power saving circuitry 200of FIG. 2 and/or representative of example operations which may be performed by programmable circuitry to implement and/or instantiate the power saving circuitry 200of FIG. 2, are shown in FIGS. 4-7. The machine readable instructions may be one or more executable programs or portion(s) of one or more executable programs for execution by programmable circuitry such as the programmable circuitry 1412 shown in the example processor platform 1400 discussed below in connection with FIG. 14 and/or may be one or more function(s) or portion(s) of functions to be performed by the example programmable circuitry (e.g., an FPGA) discussed below in connection with FIGS. 15 and/or 16. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-7, many other methods of implementing the example power saving circuitry 200may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 3 is a flowchart representative of example machine readable instructions and/or example operations 300 that may be executed, instantiated, and/or performed by programmable circuitry to determine a charging rate for a computing device 104. The example machine-readable instructions and/or the example operations 300 of FIG. 3 begin at block 302, at which the example power circuitry 208 determines if the battery is fully charged. For example, if the battery is fully charged (e.g., "TRUE"), the example instructions 300 end. Alternatively, if the battery is not fully charged (e.g., "FALSE"), control advances to block 304.

At block 304, the example power circuitry 208 determines if a charging cable 110 (of FIG. 1) is plugged into the example computing device 104. If the example charging cable 110 (e.g., the charger) is plugged in and there is power at the example wall outlet 108 of FIG. 1, then charge is determined to be able to flow to the example computing device 104 from the example wall outlet 108 via the example charging cable 110.

At block 306, the example user presence detector circuitry 204 determines if a user 102 (FIG. 1) is present based on at least one of an input from a human interface device 114, a notification from a proximity sensor, and CPU activity (e.g., CPU cycles). For example, if a user 102 (FIG. 1) is present (e.g., "TRUE"), control advances to block 308. Alternatively, if a user 102 (FIG. 1) is determined to not be present (e.g., "FALSE"), control advances to block 316.

At block 308, the example user presence detector circuitry 204 determines that a user 102 (FIG. 1) is present. At block 310, the example power circuitry 208 (e.g., dynamic tuning DTT) selects a same charging rate (e.g., the first charging rate, the lower charging level, a charging rate of 0.2C). Control advances to block 314.

At block 314, the example user presence detector circuitry 204 monitors user presence. After block 314, control returns to block 306. Returning to block 306, if the user 102 (FIG. 1) is not present (e.g., "FALSE"), control advances to block 316 where the example user presence detector circuitry 204 determines the user 102 (FIG. 1) is not present (e.g., absent, unavailable, etc.). After block 316, control advances to block 318.

At block 318, the example temperature detector circuitry 206 determines if the skin temperature of the example computing device 104 is greater than or equal to 48° Celsius. In addition, at block 318, the example power circuitry 208 determines if the battery of the example computing device 104 is at least 80% charged. If both the skin temperature of the example computing device 104 is greater than or equal to 48° Celsius and the battery of the example computing device 104 is at least 80% charged, (e.g., "TRUE"), control advances to block 310 where the power circuitry 208 will determine to keep the 0.2 C charge rate. However, if the temperature of the computing device 104 is less than 48°C or the battery level of the battery is less than 80%, then control advances to block 320.

At block 320, the example power circuitry 208 (e.g., a component of the DTT) modifies the charging rate and the example cooling circuitry 210 (e.g., a component of the DTT) modifies the fan speed.

At block 322, the example power circuitry 208 changes the charge rate (e.g., increases the charging rate from the example first charge level to the example second charge level). In addition, at block 322, the example cooling circuitry 210 sets a fan power percentage. For example, the fan power percentage is based on the temperature of the computing device 104. For example, if the temperature detector circuitry 206 determines that the skin temperature of the computing device 104 is 48°Celsius, the example cooling circuitry 210 sets the fan power at 100% (e.g., one hundred percent).

For example, if the temperature detector circuitry 206 determines that the skin temperature of the computing device 104 is 46°Celsius, the example cooling circuitry 210 sets the fan power at 80% (e.g., eighty percent). For example, if the temperature detector circuitry 206 determines that the skin temperature of the computing device 104 is 44°Celsius, the example cooling circuitry 210 sets the fan power at 60% (e.g., sixty percent).

At block 324, the example user presence detector circuitry 204 determines if the user 102 (FIG. 1) is present. For example, if the user 102 (FIG. 1) is present (e.g., "TRUE"), control advances to block 326. Alternatively, if the user 102 (FIG. 1) is not present (e.g., "FALSE"), the control advances to block 328.

At block 328, the example power circuitry 208 continues the same charging rate and the example cooling circuitry 210 continues at a higher fan speed.

At block 330, the example power circuitry 208 charges the computing device 104 at a charging rate of 1C (e.g., one Coulomb) until the temperature detector circuitry 206 determines that the skin of the computing device 104 reaches 48°C (e.g., forty-eight degrees Celsius).

At block 332, the example power circuitry 208 monitors, at 10 second intervals, the example battery level. At block 332, the example temperature detector circuitry 206 monitors, at 10 second intervals, the temperature of the skin (e.g., casing, surface, body, etc.) of the computing device 104 (FIG. 1). For example, if the example skin temperature of the computing device 104 is greater than 48°C and the battery level is greater than 80%, control advances to block 312 for a reduced charge rate of 0.2 C (e.g., a rate of zero point two Coulombs). However, if the skin temperature of the computing device 104 is less than 48°C or the battery level is less than 80%, control returns to block 322 to change the battery charging rate and the fan speed. The example instructions 300 end, after the battery of the computing device 104 is fully charged.

FIG. 4 is a flowchart representative of example machine readable instructions and/or example operations 400 that may be executed, instantiated, and/or performed by programmable circuitry to determine a charging level (e.g., charging rate) for the computing device 104 based on user presence. The example machine-readable instructions and/or the example operations 400 of FIG. 4 begin at block 402, at which the example power circuitry 208 determines if the battery needs to be charged. For example, if the battery needs to be charged (e.g., "YES"), control advances to block 404. Alternatively, if the battery does not need to be charged, (e.g., "NO"), the instructions 400 end.

At block 404, the example power circuitry 208 determines if the example charging cable 110 (e.g., charger) is plugged into the example power source 108 (e.g., wall outlet). For example, if a charging cable 110 is plugged into the example power source 108 (e.g., "YES"), control advances to block 406. Alternatively, if the charging cable 110 (e.g., charger) is not plugged into the power source 108 (e.g., "NO"), the instructions 400 end.

At block 406, the example user presence detector circuitry 204 determines if a user is present. For example, if the user presence detector circuitry 204 determines that a user 102 is present (e.g., "YES"), control advances to block 408. Alternatively, if the user presence detector circuitry 204 determines that a user is not present (e.g., "NO"), control advances to block 412.

At block 408, the power circuitry 208 causes the battery to charge at a first charge level. In some examples, the first charge level is set as 0.2 C. In other example, the first charge level is classified as a lower charge rate, a low-heat charge rate, a user comfort charge level, etc.

At block 410, the example power circuitry 208 monitors the battery level. For example, by monitoring the battery level, control returns to block 402, where the power circuitry 208 determines if the battery still has capacity to be charged.

At block 412, the example temperature detector circuitry 206 determines if the device temperature is less than the heat threshold. For example, if the example temperature detector circuitry 206 determines that the temperature of the computing device 104 is less than the heat threshold (e.g., "YES"), control advances to block 414. Alternatively, if the temperature detector circuitry 206 determines that the temperature of the computing device 104 is not less than the heat threshold (e.g., "NO"), control progresses to block 408. In some examples, the heat threshold is between 46° Celsius and 50° Celsius based on user preference and safety recommendations. Some example temperature heat threshold temperatures are further described in connection with FIG. 7.

At block 414, the example power circuitry 208 determines if the battery level is greater than the power threshold. For example, if the power circuitry 208 determines the battery level is greater than the power threshold (e.g., "YES"), control progresses to block 408. Alternatively, if the power circuitry 208 determines that the battery level is not greater than the power threshold (e.g., "NO"), control advances to block 416. In some examples, the power threshold is 80% of the battery charged. In other examples, the power threshold is set higher than 80% of the battery charged, such as 95%. In yet other examples, the power threshold is set lower than 80% of the battery charged, such as 60%. In some examples, the power threshold is set by the user 102.

At block 416, the example power circuitry 208 causes the battery to charge at a second charge level. In some examples, the second charge level is an increased charge level. In other examples, the second charge level is a user absence charge level. In yet other examples, the second charge level is a charging rate that greater (e.g., more) than the charging rate of the first charge level. After block 416, control advances to block 410, where the power circuitry 208 monitors the battery level. After block 416, control returns to block 402, and if the battery does not need to be charged, the instructions 400 end.

FIG. 5 is a flowchart representative of example machine readable instructions and/or example operations 500 that may be executed, instantiated, and/or performed by programmable circuitry to, based on user presence and absence, transmit AI workloads to AI inference circuitry 214 that is local to the computing device 104 and afterwards transmit AI tokens to AI inference circuitry 214 that is external to the computing device 104 (e.g., AI inference circuitry 214 that is instantiated on a remote computing device 106) or transmit AI workloads to AI inference circuitry 214 that is external to the computing device 104 (e.g., AI inference circuitry 214 that is instantiated on a remote computing device 106). The example machine-readable instructions and/or the example operations 500 of FIG. 5 begin at block 502, at which the workload distributor circuitry 212 executes the AI workload given by the user 102.

At block 504, the example user presence detector circuitry 204 of the computing device 104 (e.g., edge device, local device, user device, etc.) checks for user presence and user attentiveness. For example, if the user presence detector circuitry 204 determines that the user is present and attentive, control advances to block 506. Alternatively, if the user is not present or not attentive, then control advances to block 520.

At block 506, the example workload distributor circuitry 212 divides the AI workload into equal chunks.

At block 508, the example AI inference circuitry 214 with a local AI model (e.g., small language model) from the local AI model database 216 executes AI workload chunks in sequence.

At block 510, the example workload distributor circuitry 212 (e.g., orchestrator) sends the generated tokens to the example AI inference circuitry 214 of the example remote computing device 106 which utilizes a remote AI model (e.g., large language model) from the remote AI model database 218.

At block 512, the example AI inference circuitry 214 of the remote computing device 106 with access to the remote AI model (e.g., large language model) from the remote AI model database 218 corrects tokens and sends corrected tokens back to the example workload distributor circuitry 212 (e.g., orchestrator) of the example computing device 104.

At block 514, the example AI inference circuitry 214 of the example computing device 104 with access to the local AI model (e.g., small language model) from the local AI model database 216 discards old, generated tokens and starts inferencing from the corrected tokens.

At block 516, the example workload distributor circuitry 212 (e.g., orchestrator) repeats the steps (e.g., operations) of block 510 through block 514 until all the chunks of the AI workload are executed. After all of the chunks of the AI workload are executed, control advances to block 518.

At block 518, the example workload distributor circuitry 212 provides the prompt to the example user 102. After block 518, the instructions 500 end.

Returning to block 504, if the example computing device 104 checks for the user's presence and attentiveness and the user 102 is determined to not be present or determined to not be attentive, control advances to block 520.

At block 520, the example workload distributor circuitry 212 sends (e.g., transmits) the entire workload to the remote computing device 106 with access to the remote AI model (e.g., large language model) from the remote AI model database 218. For example, the workload distributor circuitry 212 instructs the example network interface 202 of the computing device 104 to transmit the entire AI workload to a network interface 202 associated with the remote computing device 106. At block 520, the example power circuitry 208 enters (e.g., selects to enter) a low power mode for the computing device 104 to save power.

At block 522, the example workload distributor circuitry 212 (e.g., orchestrator) divides the AI workload into equal chunks and subsequently uses the example network interface 202 to transmit the chunks of the AI workload to the remote computing device 106.

At block 524, the example AI inference circuitry 214 of the remote computing device 106 with a remote model from the remote model database 218 executes the AI workload with the available bigger model.

At block 526, the example AI inference circuitry 214 of the remote computing device 106 with the remote AI model (e.g., large language model) from the remote AI model database 218 periodically sends generated token information to the example workload distributor circuitry 212 (e.g., orchestrator) of the computing device 104. The example workload distributor circuitry 212 of the example computing device 104 takes the feedback for user presence by returning to block 504.

After block 526, at block 528 the example workload distributor circuitry 212 (e.g., orchestrator) provides the prompt to the user 102 of FIG. 1. After the example workload distributor circuitry 212 provides the prompt to the user 102, the example instructions 500 end.

FIG. 6 is a flowchart representative of example machine readable instructions and/or example operations 600 that may be executed, instantiated, and/or performed by programmable circuitry to, based on user presence and absence, transmit AI workloads to AI inference circuitry 214 that is local to the computing device 104 and afterwards transmit AI tokens to AI inference circuitry 214 that is external to the computing device 104 (e.g., AI inference circuitry 214 that is instantiated on a remote computing device 106) or transmit AI workloads to AI inference circuitry 214 that is external to the computing device 104 (e.g., AI inference circuitry 214 that is instantiated on a remote computing device 106). The example machine-readable instructions and/or the example operations 600 of FIG. 6 begin at block 602, at which the example workload distributor circuitry 212 divides the AI workload into portions.

At block 604, the example user presence detector circuitry 204 determines if the user 102 is present. For example, if the user presence detector circuitry 204 determines that a user is present (e.g., "YES"), control advances to block 606. Alternatively, if the user presence detector circuitry 204 determines that a user is not present (e.g., "NO"), control advances to block 614.

At block 606, the example workload distributor circuitry 212 distributes at least one portion of the AI workload to first AI inference circuitry 214 that is local to the example computing device 104 of FIG. 2.

At block 608, the example AI inference circuitry 214 of the computing device 104 generates at least one token from the at least one portion of the AI workload. The example AI inference circuitry 214 uses a local AI model from the local AI model database 216 to generate the at least one token.

At block 610, the example workload distributor circuitry 212 sends at least one processed token from the AI workload to second AI inference circuitry 214 that is external to the computing device 104. The example second the inference circuitry 214 may be on the remote computing device 106. In some examples, the operations of block 610 are completed by the network interface 202.

At block 612, the example workload distributor circuitry 212 or the example network interface 202 receives at least one verified response from the second AI inference circuitry 214 of the remote computing device 106

At block 618, the example workload distributor circuitry 212 presents at least one response to the user 102.

At block 614, the example workload distributor circuitry 212 distributes at least one portion of the workload to second AI inference circuitry that is external to the computing device 104. The example second AI inference circuitry 214 of the remote computing device 106. Uses the example remote add model from the remote add model database 218. Then, at block 616 the example workload distributor circuitry 212 or the example network interface 202 receives at least one completed response from second AI inference circuitry 214 of the remote computing device 106. Control advances to block 618.

At block 620, the example workload distributor circuitry determines if there are more portions of the AI workload to process. For example, if there are more portions of the AI workload to process (e.g., "YES"), control advances to block 622. Alternatively, if there are not more portions of AI workloads to process (e.g., "NO"), the instructions 600 end.

At block 622, the example user presence detector circuitry 204 monitors user presence which returns to block 604.

FIG. 7 is a flowchart representative of example machine readable instructions and/or example operations 700 that may be executed, instantiated, and/or performed by programmable circuitry to, based on user presence and absence determine a location to transmit AI workloads and determine a charging rate for the computing device 104. The example machine-readable instructions and/or the example operations 700 of FIG. 7 begin at block 702, where the example user presence detector circuitry 204 determines if a user is present. For example, if the user presence detector circuitry 204 determines that a user is present (e.g., "YES"), control advances to block 704. Alternatively, if the user presence detector circuitry 204 determines that a user is not present (e.g., "NO"), control advances to block 708.

At block 704, the example workload distributor circuitry 212 distributes at least one portion of the AI workload to local AI inference circuitry 214 (e.g., first AI inference circuitry, device-based AI inference circuitry, etc.) for processing with a local AI model from the local AI model database 216. After block 704, control advances to block 706.

At block 706, the example power circuitry 208 causes charging at a lower charge level. For example, the lower charge level may be set at 0.2 Coulombs. In other examples, the lower charge level is a user comfort charge level instead of a maximum battery efficiency charge level. After block 706, control advances to block 712.

At block 708, the example workload distributor circuitry 212 distributes at least one portion of the AI workload to external AI inference circuitry such as the AI inference circuitry 214 of the remote computing device 106 for processing with a remote AI model from the remote AI model database 218.

At block 710, the example power circuitry 208 causes charging at a higher charge level. For example, the higher charge level may be set at 1.0 Coulomb. In other examples, the higher charge level is a maximum battery efficiency charge rate, which increases the temperature of the device significantly. After block 710, control advances to block 712.

At block 712, the example workload distributor circuitry 212 determines if there are more portions of the AI workload to process. For example, if the workload distributor circuitry 212 determines that there are more portions of the AI workload to process (e.g., "YES"), control returns to block 702. Alternatively, if the workload distributor circuitry 212 determines that there are not more portions of the AI workload to process (e.g., "NO"), control advances to block 714.

At block 714, the example power circuitry 208 determines if there is more battery to charge. For example, if the power circuitry 208 determines that there is more battery to charge (e.g., "YES"), control returns to block 702. Alternatively, if the power circuitry 208 determines that there is not more battery to charge (e.g., "NO"), the instructions 700 end.

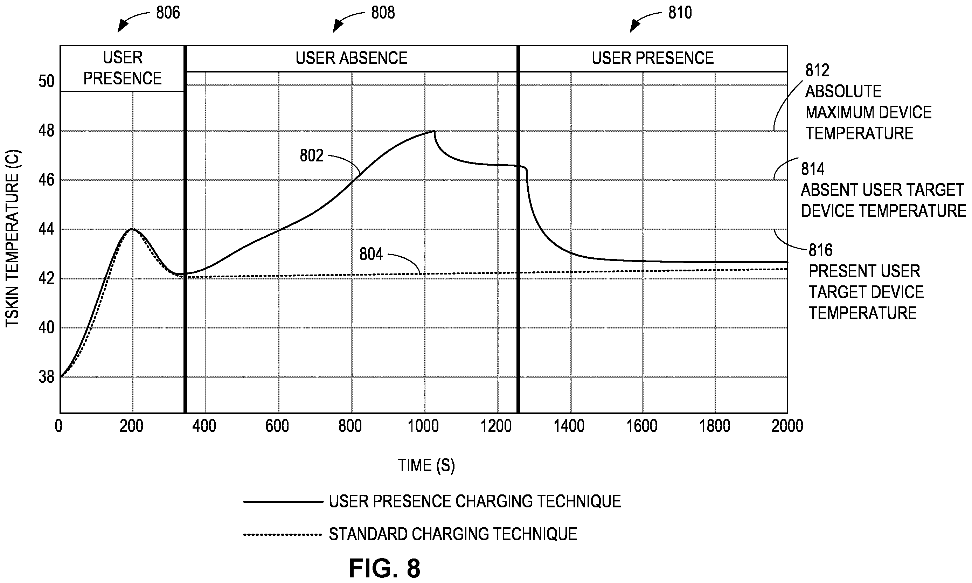

FIG. 8 is a graph 800 that compares a first charging rate based on user presence and temperature of the computing device and a second charging rate based on temperature of the example computing device 104. For example, a first technique 802 (which is not based on user presence) is shown in dashed lines, and a second technique 804 (which is based on user presence) is shown in dotted lines. The example graph 800 is a plot of 1C charging with workload running in parallel. In the example of FIG. 7, the computing device 104 is charging at 1C and is executing a workload in parallel. For example, the workload may include package power (e.g., 5.4 Watts) and system power (e.g., 13.6 Watts). The example of FIG. 8 is a rare scenario in daily usage.

FIG. 8 is a graph illustrating a temperature over time during which a user presence and use absence are detected. According to the illustrated example, the computing device 104 utilizes passive thermal cooling. As used herein, a passive thermal solution does not use active power such as fans to cool down. In the simulation of FIG. 8, the computing device 104 which is passively cooled, after being at 46 Degrees Celsius (approximately 115 Degrees Fahrenheit), dropped to approximately 44 Degrees Celsius (approximately 111 Degrees Fahrenheit) in three minutes (e.g., approximately 180 seconds). Therefore, an actively cooled system could be cooled from 46 Degrees Celsius to 44 Degrees Celsius even faster than three minutes. The computing device 104, due to the second charging rate 804, for a period of time which is approximately 15 minutes, only increased by two degrees Celsius compared to the highest temperature of the first charging rate 802. For example, in actively cooled systems (e.g., computing devices that use fans), the computing device 104 increases fan flow so that the temperature of the computing device 104 stays at 44 Degrees Celsius. After the example user 102 returns, and the computing device 104 switches the fan flow to accommodate a lower charging rate, which reduces any increased fan noise that was accompanying the fan flow which corresponded to the higher charging rate.

In the example of FIG. 8, the example user 102 is present for a first time period 806 (e.g., approximately 380 seconds), is absent (e.g., not present) for a second time period 808 (e.g., approximately 800 seconds), and returns to being present for a third time period 810 (e.g., approximately 700 seconds). During the various time periods, the computing device 104 may either select to implement the first charging rate 802 or the second charging rate 804.

There are three temperatures that are listed: the absolute maximum device temperature 812, an absent user target device temperature 814, and a present user target device temperature 816.

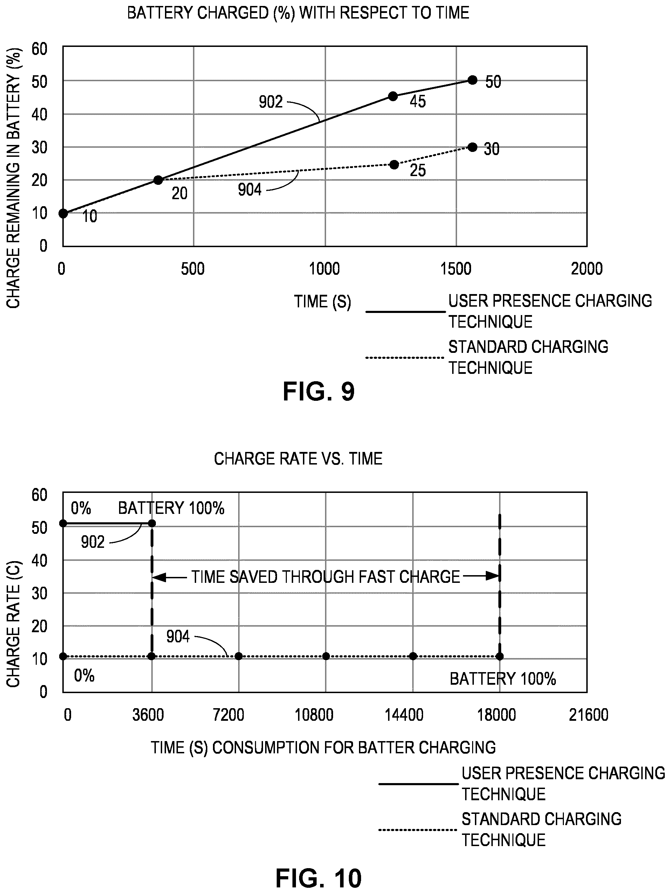

FIG. 9 is a graph that compares, for a specified period of time, a percentage of a battery charged by the first charging rate (e.g., user presence charging technique) of FIG. 8 and a percentage of the battery charged the second charging rate (e.g., standard charging technique) of FIG. 8. FIG. 9 includes a first line 902 (e.g., the user presence charging technique which charges the battery at higher levels if the user 102 is absent) that tracks the battery charge percentage based on time and a second line 904 (e.g., the standard charging technique which charges the battery at a constant level irrespective if the user 102 is absent). After roughly 1500 seconds, the battery is approximately 50% charged for the first line 902, and is only charged to 30% for the second line 904.

FIG. 10 is a graph that compares an amount of time to charge a battery for the user presence charging technique of FIG. 8 and an amount of time to charge the battery for the standard charging technique of FIG. 8. Rather than taking a full 18,000 seconds (e.g., approximately 5 hours) with the standard charging technique 904 to be fully charged, the computing device 104 that charges with the user presence charging technique 902 is fully charged after 3,600 seconds (e.g., approximately 1 hour).

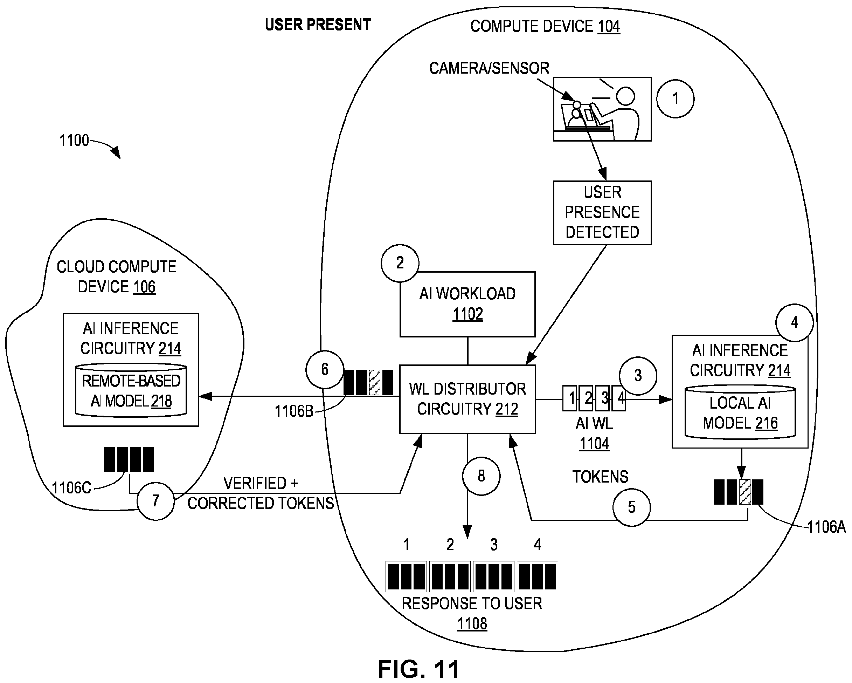

FIG. 11 is an illustration 1100 which describes how the power-saving circuitry 200 of FIG. 2 distributes an AI workload based on a determination that a user 102 is present at the computing device 104. At the first operation, the example computing device 104 detects a presence of the example user 102.

At the second operation, the example user 102 submits an AI workload. At the third operation, the example workload distributor 212 of the example computing device 104 then distributes (e.g., orchestrates) portions of the AI workload to the AI inference circuitry 214. In the example of FIG. 11, there are four portions of the AI workload. At the fourth operation, the example AI inference circuitry 214 performs AI inference with a local AI model from the local AI model database 216. The AI inference circuitry 214 generates four tokens 1106A. While the AI inference circuitry 214 is unaware that one of the tokens 1106A is incorrect, the token is shown with dashed lines for ease of illustration.

At the fifth operation, the example AI inference circuitry 214 transmits the unverified tokens 1106A to the example workload distributor circuitry 212. At the sixth operation, the example workload distributor circuitry 212 transmits the unverified tokens 1106A to the example remote computing device 106 for verification. At the seventh operation, the example AI inference circuitry 214 of the remote computing device 106 uses remote AI model (e.g., cloud model, larger model) to verify and correct the incorrect tokens 1106A to generate verified tokens 1106C. The verified tokens 1106C are transmitted back to the workload distributor circuitry 212 which then presents an AI response 1108 based on the verified tokens 1106C to the example user 102.

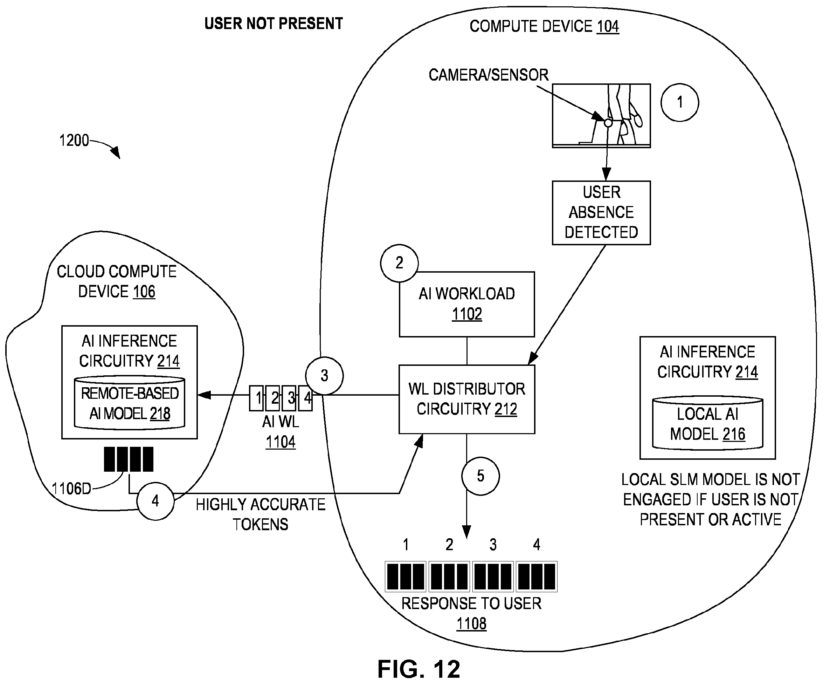

FIG. 12 is an illustration which describes how the power-saving circuitry 200 of FIG. 2 distributes an AI workload based on a determination that a user 102 is not present at the computing device 104. At the first operation, the example computing device 104 determines that the example user 102 is not present (e.g., absent). At the second operation, there is an AI workload to be distributed by the example workload distributor circuitry 212. At the third operation, rather than transmitting the portions of the AI workload to the local AI model and the AI inference circuitry 214 that is present on the computing device 104, the workload distributor circuitry 212 transmits the portions of the AI workload directly to the remote computing device 106. At operation 4, the remote computing device 106 uses the AI inference circuitry 214 that is external from the computing device 104 to perform the AI inference. The AI inference is highly accurate because the remote computing device 106 uses a remote AI model that is larger than the local AI model. The remote computing device 106 transmits the highly accurate tokens to the example workload distributor circuitry 212. At operation 5, the workload distributor circuitry 212 presents an AI response 1108 based on the highly accurate tokens to the example user 102.

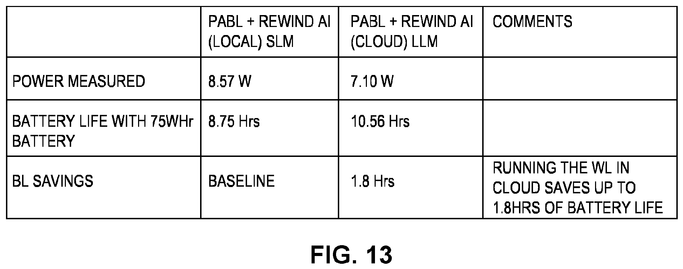

FIG. 13 is a graph that compares an amount of time to distribute the AI workload to an external device compared to an amount of time to distribute the AI workload to the local computing device. For example, the computing device 104 with a local AI model used 8.57 Watts of power and had a battery life of 8.75 hours (from a 75WHr battery). However, by leveraging the remote computing device 106, the computing device 104 is able to use 7.10 Watts of power and had a battery life of 10.56 hours (from a 75WHr battery) which is a power savings for the computing device 104 of approximately 1.8 hours.

FIG. 14 is a block diagram of an example programmable circuitry platform 1400 structured to execute and/or instantiate the example machine-readable instructions and/or the example operations of FIGS. 4-7 to implement the power saving circuitry 200 of FIG. 2. The programmable circuitry platform 1400 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1400 of the illustrated example includes programmable circuitry 1412. The programmable circuitry 1412 of the illustrated example is hardware. For example, the programmable circuitry 1412 can be implemented by one or more integrated circuits, logic circuits, FPGAs, microprocessors, CPUs, GPUs, DSPs, and/or microcontrollers from any desired family or manufacturer. The programmable circuitry 1412 may be implemented by one or more semiconductor based (e.g., silicon based) devices. In this example, the programmable circuitry 1412 implements the example network interface 202, the example user presence detector circuitry 204, the example temperature detector circuitry 206, the example power circuitry 208, the example cooling circuitry 210, the example workload distributor circuitry 212, and the example AI inference circuitry 214.

The programmable circuitry 1412 of the illustrated example includes a local memory 1413 (e.g., a cache, registers, etc.). The programmable circuitry 1412 of the illustrated example is in communication with main memory 1414, 1416, which includes a volatile memory 1414 and a non-volatile memory 1416, by a bus 1418. The volatile memory 1414 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1416 may be implemented by flash memory and/or any other desired type of memory device. Access to the main memory 1414, 1416 of the illustrated example is controlled by a memory controller 1417. In some examples, the memory controller 1417 may be implemented by one or more integrated circuits, logic circuits, microcontrollers from any desired family or manufacturer, or any other type of circuitry to manage the flow of data going to and from the main memory 1414, 1416.

The programmable circuitry platform 1400 of the illustrated example also includes interface circuitry 1420. The interface circuitry 1420 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 1422 are connected to the interface circuitry 1420. The input device(s) 1422 permit(s) a user (e.g., a human user, a machine user, etc.) to enter data and/or commands into the programmable circuitry 1412. The input device(s) 1422 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1424 are also connected to the interface circuitry 1420 of the illustrated example. The output device(s) 1424 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1420 of the illustrated example, thus, typically includes a graphics driver card, a graphics driver chip, and/or graphics processor circuitry such as a GPU.

The interface circuitry 1420 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1426. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1400 of the illustrated example also includes one or more mass storage discs or devices 1428 to store firmware, software, and/or data. Examples of such mass storage discs or devices 1428 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1432, which may be implemented by the machine readable instructions of FIGS. 4-7, may be stored in the mass storage device 1428, in the volatile memory 1414, in the non-volatile memory 1416, and/or on at least one non-transitory computer readable storage medium such as a CD or DVD which may be removable.

FIG. 15 is a block diagram of an example implementation of the programmable circuitry 1412 of FIG. 14. In this example, the programmable circuitry 1412 of FIG. 14 is implemented by a microprocessor 1500. For example, the microprocessor 1500 may be a general-purpose microprocessor (e.g., general-purpose microprocessor circuitry). The microprocessor 1500 executes some or all of the machine-readable instructions of the flowcharts of FIGS. 4-7 to effectively instantiate the circuitry of FIG. 2 as logic circuits to perform operations corresponding to those machine readable instructions. In some such examples, the circuitry of FIG. 2 is instantiated by the hardware circuits of the microprocessor 1500 in combination with the machine-readable instructions. For example, the microprocessor 1500 may be implemented by multi-core hardware circuitry such as a CPU, a DSP, a GPU, an XPU, etc. Although it may include any number of example cores 1502 (e.g., 1 core), the microprocessor 1500 of this example is a multi-core semiconductor device including N cores. The cores 1502 of the microprocessor 1500 may operate independently or may cooperate to execute machine readable instructions. For example, machine code corresponding to a firmware program, an embedded software program, or a software program may be executed by one of the cores 1502 or may be executed by multiple ones of the cores 1502 at the same or different times. In some examples, the machine code corresponding to the firmware program, the embedded software program, or the software program is split into threads and executed in parallel by two or more of the cores 1502. The software program may correspond to a portion or all of the machine readable instructions and/or operations represented by the flowcharts of FIGS. 4-7.

The cores 1502 may communicate by a first example bus 1504. In some examples, the first bus 1504 may be implemented by a communication bus to effectuate communication associated with one(s) of the cores 1502. For example, the first bus 1504 may be implemented by at least one of an Inter-Integrated Circuit (12C) bus, a Serial Peripheral Interface (SPI) bus, a PCI bus, or a PCle bus. Additionally or alternatively, the first bus 1504 may be implemented by any other type of computing or electrical bus. The cores 1502 may obtain data, instructions, and/or signals from one or more external devices by example interface circuitry 1506. The cores 1502 may output data, instructions, and/or signals to the one or more external devices by the interface circuitry 1506. Although the cores 1502 of this example include example local memory 1520 (e.g., Level 1 (L1) cache that may be split into an L1 data cache and an L1 instruction cache), the microprocessor 1500 also includes example shared memory 1510 that may be shared by the cores (e.g., Level 2 (L2 cache)) for high-speed access to data and/or instructions. Data and/or instructions may be transferred (e.g., shared) by writing to and/or reading from the shared memory 1510. The local memory 1520 of each of the cores 1502 and the shared memory 1510 may be part of a hierarchy of storage devices including multiple levels of cache memory and the main memory (e.g., the main memory 1414, 1416 of FIG. 14). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1502 may be referred to as a CPU, DSP, GPU, etc., or any other type of hardware circuitry. Each core 1502 includes control unit circuitry 1514, arithmetic and logic (AL) circuitry (sometimes referred to as an ALU) 1516, a plurality of registers 1518, the local memory 1520, and a second example bus 1522. Other structures may be present. For example, each core 1502 may include vector unit circuitry, single instruction multiple data (SIMD) unit circuitry, load/store unit (LSU) circuitry, branch/jump unit circuitry, floating-point unit (FPU) circuitry, etc. The control unit circuitry 1514 includes semiconductor-based circuits structured to control (e.g., coordinate) data movement within the corresponding core 1502. The AL circuitry 1516 includes semiconductor-based circuits structured to perform one or more mathematic and/or logic operations on the data within the corresponding core 1502. The AL circuitry 1516 of some examples performs integer based operations. In other examples, the AL circuitry 1516 also performs floating-point operations. In yet other examples, the AL circuitry 1516 may include first AL circuitry that performs integer-based operations and second AL circuitry that performs floating-point operations. In some examples, the AL circuitry 1516 may be referred to as an Arithmetic Logic Unit (ALU).

The registers 1518 are semiconductor-based structures to store data and/or instructions such as results of one or more of the operations performed by the AL circuitry 1516 of the corresponding core 1502. For example, the registers 1518 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1518 may be arranged in a bank as shown in FIG. 15. Alternatively, the registers 1518 may be organized in any other arrangement, format, or structure, such as by being distributed throughout the core 1502 to shorten access time. The second bus 1522 may be implemented by at least one of an I2C bus, a SPI bus, a PCI bus, or a PCle bus.

Each core 1502 and/or, more generally, the microprocessor 1500 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1500 is a semiconductor device fabricated to include many transistors interconnected to implement the structures described above in one or more integrated circuits (ICs) contained in one or more packages.

The microprocessor 1500 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1500, in the same chip package as the microprocessor 1500 and/or in one or more separate packages from the microprocessor 1500.

FIG. 16 is a block diagram of another example implementation of the programmable circuitry 1412 of FIG. 14. In this example, the programmable circuitry 1412 is implemented by FPGA circuitry 1600. For example, the FPGA circuitry 1600 may be implemented by an FPGA. The FPGA circuitry 1600 can be used, for example, to perform operations that could otherwise be performed by the example microprocessor 1500 of FIG. 15 executing corresponding machine readable instructions. However, once configured, the FPGA circuitry 1600 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1500 of FIG. 15 described above (which is a general purpose device that may be programmed to execute some or all of the machine readable instructions represented by the flowchart(s) of FIGS. 4-7 but whose interconnections and logic circuitry are fixed once fabricated), the FPGA circuitry 1600 of the example of FIG. 16 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4-7. In particular, the FPGA circuitry 1600 may be thought of as an array of logic gates, interconnections, and switches. The switches can be programmed to change how the logic gates are interconnected by the interconnections, effectively forming one or more dedicated logic circuits (unless and until the FPGA circuitry 1600 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-7. As such, the FPGA circuitry 1600 may be configured and/or structured to effectively instantiate some or all of the operations/functions corresponding to the machine readable instructions of the flowchart(s) of FIGS. 4-7 as dedicated logic circuits to perform the operations/functions corresponding to those software instructions in a dedicated manner analogous to an ASIC. Therefore, the FPGA circuitry 1600 may perform the operations/functions corresponding to the some or all of the machine readable instructions of FIGS. 4-7 faster than the general-purpose microprocessor can execute the same.

In the example of FIG. 16, the FPGA circuitry 1600 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1600 of FIG. 16 may access and/or load the binary file to cause the FPGA circuitry 1600 of FIG. 16 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1600 of FIG. 16 to cause configuration and/or structuring of the FPGA circuitry 1600 of FIG. 16, or portion(s) thereof.

The FPGA circuitry 1600 of FIG. 16, includes example input/output (I/O) circuitry 1602 to obtain and/or output data to/from example configuration circuitry 1604 and/or external hardware 1606. For example, the configuration circuitry 1604 may be implemented by interface circuitry that may obtain a binary file, which may be implemented by a bit stream, data, and/or machine-readable instructions, to configure the FPGA circuitry 1600, or portion(s) thereof. In some such examples, the configuration circuitry 1604 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1606 may be implemented by external hardware circuitry. For example, the external hardware 1606 may be implemented by the microprocessor 1500 of FIG. 15.

The FPGA circuitry 1600 also includes an array of example logic gate circuitry 1608, a plurality of example configurable interconnections 1610, and example storage circuitry 1612. The logic gate circuitry 1608 and the configurable interconnections 1610 are configurable to instantiate one or more operations/functions that may correspond to at least some of the machine readable instructions of FIGS. 4-7 and/or other desired operations. The logic gate circuitry 1608 shown in FIG. 16 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1608 to enable configuration of the electrical structures and/or the logic gates to form circuits to perform desired operations/functions. The logic gate circuitry 1608 may include other electrical structures such as look-up tables (LUTs), registers (e.g., flip-flops or latches), multiplexers, etc.

The configurable interconnections 1610 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1608 to program desired logic circuits.

The storage circuitry 1612 of the illustrated example is structured to store result(s) of the one or more of the operations performed by corresponding logic gates. The storage circuitry 1612 may be implemented by registers or the like. In the illustrated example, the storage circuitry 1612 is distributed amongst the logic gate circuitry 1608 to facilitate access and increase execution speed.

The example FPGA circuitry 1600 of FIG. 16 also includes example dedicated operations circuitry 1614. In this example, the dedicated operations circuitry 1614 includes special purpose circuitry 1616 that may be invoked to implement commonly used functions to avoid the need to program those functions in the field. Examples of such special purpose circuitry 1616 include memory (e.g., DRAM) controller circuitry, PCle controller circuitry, clock circuitry, transceiver circuitry, memory, and multiplier-accumulator circuitry. Other types of special purpose circuitry may be present. In some examples, the FPGA circuitry 1600 may also include example general purpose programmable circuitry 1618 such as an example CPU 1620 and/or an example DSP 1622. Other general purpose programmable circuitry 1618 may additionally or alternatively be present such as a GPU, an XPU, etc., that can be programmed to perform other operations.

Although FIGS. 15 and 16 illustrate two example implementations of the programmable circuitry 1412 of FIG. 14, many other approaches are contemplated. For example, FPGA circuitry may include an on-board CPU, such as one or more of the example CPU 1620 of FIG. 15. Therefore, the programmable circuitry 1412 of FIG. 14 may additionally be implemented by combining at least the example microprocessor 1500 of FIG. 15 and the example FPGA circuitry 1600 of FIG. 16. In some such hybrid examples, one or more cores 1502 of FIG. 15 may execute a first portion of the machine readable instructions represented by the flowchart(s) of FIGS. 4-7 to perform first operation(s)/function(s), the FPGA circuitry 1600 of FIG. 16 may be configured and/or structured to perform second operation(s)/function(s) corresponding to a second portion of the machine readable instructions represented by the flowcharts of FIG. 4-7, and/or an ASIC may be configured and/or structured to perform third operation(s)/function(s) corresponding to a third portion of the machine readable instructions represented by the flowcharts of FIGS. 4-7.

It should be understood that some or all of the circuitry of FIG. 2 may, thus, be instantiated at the same or different times. For example, same and/or different portion(s) of the microprocessor 1500 of FIG. 15 may be programmed to execute portion(s) of machine-readable instructions at the same and/or different times. In some examples, same and/or different portion(s) of the FPGA circuitry 1600 of FIG. 16 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1500 of FIG. 15 may execute machine readable instructions in one or more threads executing concurrently and/or in series. In some examples, the FPGA circuitry 1600 of FIG. 16 may be configured and/or structured to carry out operations/functions concurrently and/or in series. Moreover, in some examples, some or all of the circuitry of FIG. 2 may be implemented within one or more virtual machines and/or containers executing on the microprocessor 1500 of FIG. 15.

In some examples, the programmable circuitry 1412 of FIG. 14 may be in one or more packages. For example, the microprocessor 1500 of FIG. 15 and/or the FPGA circuitry 1600 of FIG. 16 may be in one or more packages. In some examples, an XPU may be implemented by the programmable circuitry 1412 of FIG. 14, which may be in one or more packages. For example, the XPU may include a CPU (e.g., the microprocessor 1500 of FIG. 15, the CPU 1620 of FIG. 16, etc.) in one package, a DSP (e.g., the DSP 1622 of FIG. 16) in another package, a GPU in yet another package, and an FPGA (e.g., the FPGA circuitry 1600 of FIG. 16) in still yet another package.

A block diagram illustrating an example software distribution platform 1705 to distribute software such as the example machine readable instructions 1432 of FIG. 14 to other hardware devices (e.g., hardware devices owned and/or operated by third parties from the owner and/or operator of the software distribution platform) is illustrated in FIG. 17. The example software distribution platform 1705 may be implemented by any computer server, data facility, cloud service, etc., capable of storing and transmitting software to other computing devices. The third parties may be customers of the entity owning and/or operating the software distribution platform 1705. For example, the entity that owns and/or operates the software distribution platform 1705 may be a developer, a seller, and/or a licensor of software such as the example machine readable instructions 1432 of FIG. 14. The third parties may be consumers, users, retailers, OEMs, etc., who purchase and/or license the software for use and/or re-sale and/or sub-licensing. In the illustrated example, the software distribution platform 1705 includes one or more servers and one or more storage devices. The storage devices store the machine readable instructions 1432, which may correspond to the example machine readable instructions of FIGS. 4-7, as described above. The one or more servers of the example software distribution platform 1705 are in communication with an example network 1710, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1432 from the software distribution platform 1705. For example, the software, which may correspond to the example machine readable instructions of FIG. 4-7, may be downloaded to the example programmable circuitry platform 1400, which is to execute the machine readable instructions 1432 to implement the power saving circuitry 200. In some examples, one or more servers of the software distribution platform 1705 periodically offer, transmit, and/or force updates to the software (e.g., the example machine readable instructions 1432 of FIG. 14) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein, integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that save power of a computing device 104 based on user presence. For example, if the computing device 104 detects that a user is present, then the computing device 104 will perform AI inference with local AI models and charge the battery at a rate that does not increase the temperature of the computing device 104 beyond a user comfort threshold. Alternatively, if the computing device 104 detects that a user is absent, then the computing device 104 will perform AI inference with an external AI model which saves power for the computing device 104. In addition, the computing device 104 will charge the battery at a rate that may increase the temperature of the computing device 104 beyond the user comfort threshold. Disclosed systems, apparatus, articles of manufacture, and methods improve the efficiency of using a computing device by allowing the computing device to operate for longer periods of time by saving the power based on user presence. Disclosed systems, apparatus, articles of manufacture, and methods are accordingly directed to one or more improvement(s) in the operation of a machine such as a computer or other electronic and/or mechanical device.

The following section of the description relates to further examples. The numbered paragraphs in this section are not claims. The claims are set forth below in the later section headed "claims".
1. An apparatus to conserve battery power comprising: a network interface to communicate with a remote device, the remote device to perform artificial intelligence (AI) inference; computer readable instructions; and programmable circuitry to instantiate: user presence detector circuitry to determine if a user is present or not present, the user presence detector circuitry to generate a user presence detection determination; workload distributor circuitry to distribute, to either a first location or a second location, at least one portion of an AI workload based on the user presence detection determination; and power circuitry to select a first charging level or a second charging level for charging the apparatus based on the user presence detection determination.
2. The apparatus of example 1, wherein, in response to the user presence detector circuitry determining that a user is present: the workload distributor circuitry is to distribute at least one portion of the AI workload to local AI inference circuitry, wherein the local AI inference circuitry is local to the apparatus; and the power circuitry is to select the first charging level.
3. The apparatus of example 1, wherein, in response to the user presence detector circuitry determining that a user is not present: the workload distributor circuitry is to distribute at least one portion of the AI workload to a remote device; and the power circuitry is to select the second charge level, the second charge level higher than the first charge level.
4. The apparatus of example 1, wherein the user presence detector circuitry is to periodically monitor user presence.
5. The apparatus of example 1, wherein the user presence detector circuitry determines if a user is present or not present based on at least one of a camera visually detecting a user in front of the apparatus, commands input from a human-interface device connected to the apparatus, or a determination from a motion sensor connected to the apparatus.
6. The apparatus of example 1, wherein in response to detecting that a charging cable is attached to the apparatus, the workload distributor circuitry is to distribute at least one portion of the AI workload to AI inference circuitry, the AI inference circuitry which is local to the apparatus.
7. The apparatus of example 1, wherein in response to detecting that a charging cable is attached to the apparatus, the workload distributor circuitry is to distribute at least one portion of the AI workload to a cloud device, the cloud device includes AI inference circuitry that is external from the apparatus.
8. An apparatus to decrease battery charging time comprising: memory; computer readable instructions that are stored on the memory; and programmable circuitry to instantiate: user presence detector circuitry to determine if a user is present or not present; power circuitry to: in response to a determination that the user is present, charge a battery of the apparatus at a first charge level; and in response to a determination that the user is not present, charge the battery of the apparatus at a second charge level.
9. The apparatus of example 8, wherein the second charge level is a higher charge level compared to the first charge level.
10. The apparatus of example 8, further including temperature detector circuitry to determine a temperature value of the apparatus.
11. The apparatus of example 10, wherein the power circuitry is to charge the battery at the first charge level if the temperature value of the apparatus exceeds a heat threshold.
12. The apparatus of example 8, further including cooling circuitry, the cooling circuitry to decrease a temperature value of the apparatus during charging at the first charge level.
13. The apparatus of example 8, wherein the user presence detector circuitry periodically monitors user presence to determine which charging rate of the first charging rate and the second charging rate to apply to the apparatus.
14. The apparatus of example 8, wherein the user presence detector circuitry periodically monitors user presence to determine a fan speed rate.
15. An apparatus to conserve battery power comprising: a network interface to communicate with a cloud device, the cloud device to perform artificial intelligence (AI) inference; computer readable instructions; and programmable circuitry to instantiate: user presence detector circuitry to determine if a user is present or not present; and workload distributor circuitry to: in response to a determination that the user is present, distribute an AI workload to first AI inference circuitry that is local to the apparatus; and in response to a determination that the user is not present, distribute the AI workload to second AI inference circuitry that is external to the apparatus.
16. The apparatus of example 15, wherein the first AI inference circuitry uses a small language model (SLM) to process the AI workload and the second AI inference circuitry uses a large language model (LLM) to process the AI workload.
17. The apparatus of example 15, wherein the second AI inference circuitry is located in a cloud-environment.
18. The apparatus of example 15, wherein the user presence detector circuitry periodically determines if a user is present or not present.
19. The apparatus of example 15, wherein the workload distributor circuitry receives a completed token from the AI workload processed by the first AI inference circuitry that is local to the apparatus.
20. The apparatus of example 19, wherein the workload distributor circuitry transmits the completed token for verification by the second AI inference circuitry that is external to the apparatus.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus to conserve battery power comprising:
a network interface to communicate with a remote device, the remote device to perform artificial intelligence (AI) inference;
computer readable instructions; and
programmable circuitry to instantiate:
user presence detector circuitry to determine if a user is present or not present, the user presence detector circuitry to generate a user presence detection determination;
workload distributor circuitry to distribute, to either a first location or a second location, at least one portion of an AI workload based on the user presence detection determination; and
power circuitry to select a first charging level or a second charging level for charging the apparatus based on the user presence detection determination.

2. The apparatus of claim 1, wherein, in response to the user presence detector circuitry determining that a user is present:
the workload distributor circuitry is to distribute at least one portion of the AI workload to local AI inference circuitry, wherein the local AI inference circuitry is local to the apparatus; and
the power circuitry is to select the first charging level.

3. The apparatus of claim 1 or claim 2, wherein, in response to the user presence detector circuitry determining that a user is not present:
the workload distributor circuitry is to distribute at least one portion of the AI workload to a remote device; and
the power circuitry is to select the second charge level, the second charge level higher than the first charge level.

4. The apparatus of any one preceding claim, wherein the user presence detector circuitry is to periodically monitor user presence.

5. The apparatus of any one preceding claim, wherein the user presence detector circuitry determines if a user is present or not present based on at least one of a camera visually detecting a user in front of the apparatus, commands input from a human-interface device connected to the apparatus, or a determination from a motion sensor connected to the apparatus.

6. The apparatus of any one preceding claim, wherein in response to detecting that a charging cable is attached to the apparatus, the workload distributor circuitry is to distribute at least one portion of the AI workload to AI inference circuitry, the AI inference circuitry which is local to the apparatus.

7. The apparatus of any one preceding claim, wherein in response to detecting that a charging cable is attached to the apparatus, the workload distributor circuitry is to distribute at least one portion of the AI workload to a cloud device, the cloud device includes AI inference circuitry that is external from the apparatus.

8. A method comprising:
determining if a user is present or not present;
generating a user presence detection determination;
distributing, to either a first location or a second location, at least one portion of an AI workload based on the user presence detection determination; and
selecting a first charging level or a second charging level for charging an apparatus based on the user presence detection determination.

9. The method of claim 8, wherein, in response to the user presence detector circuitry determining that a user is present:
the workload distributor circuitry is to distribute at least one portion of the AI workload to local AI inference circuitry, wherein the local AI inference circuitry is local to the apparatus; and
the power circuitry is to select the first charging level.

10. The method of claim 8 or claim 9, further comprising, in response to determining that a user is not present:
distributing at least one portion of the AI workload to a remote device; and
selecting the second charge level, the second charge level higher than the first charge level.

11. The method of any one of claims 8 to 10, further comprising periodically monitoring user presence.

12. The method of any one of claims 8 to 11, further comprising determining if a user is present or not present based on at least one of a camera visually detecting a user in front of the apparatus, command input from a human-interface device connected to the apparatus, or a determination from a motion sensor connected to the apparatus.

13. The method of any one of claims 8 to 12, further comprising, in response to detecting that a charging cable is attached to the apparatus, distributing at least one portion of the AI workload to AI inference circuitry, the AI inference circuitry which is local to the apparatus.

14. The method of any one of claims 8 to 13, further comprising, in response to detecting a charging cable, distributing at least one portion of the AI workload to a cloud device, the cloud device includes AI inference circuitry.

15. A machine readable medium comprising instructions that, when executed, cause an processor to implement the method of any one of claims 8-14.
